# EUROPEAN PATENT APPLICATION

(11) **EP 4 800 899 A1**
(43) Date of publication of application: **02.09.2026**
(21) Application number: 25160201.7
(22) Date of filing: 26.02.2025
(51) Int. Cl.: H02M 1/00, H02M 1/12, H02M 3/158, H02M 7/483, H02M 7/487

(54) **POWER CONVERTER WITH LOW COMMON MODE NOISE**

(71) Applicant: Siemens Aktiengesellschaft, 80333 München (DE)
(72) Inventor: Mondal, Gopal, 91058 Erlangen (DE); Nielebock, Sebastian, 91301 Forchheim (DE)
(74) Representative: Siemens Patent Attorneys

(57) **Abstract**

A neutral-point clamped power converter comprises a DC link with two capacitors and multiple power semiconductor switches as well as a control unit that operates the switches to use only switching states that result in a common mode voltage of 0 V. The converter comprises an auxiliary converter connected to the DC link capacitors to balance the voltages of the capacitors.

## Description

The present invention relates to a power converter that is based on the setup of a three-level neutral-point clamped (NPC) power converter. These converters are known as efficient and they produce lower harmonic content than two level converters. Like other converters, during normal operation, they produce common mode (CM) noise which requires special attention to handle. The usual practice is to use passive filters. But due to the nature of CM noise the design of the filter is often challenging, especially at high frequencies where parasitic elements generally dominate to make the design of the passive components extremely challenging.

It is an object of the present invention to provide an improved power converter, particularly one with reduced CM noise.

The converter according to the invention comprises a DC link with two DC link capacitors arranged in a series connection between DC terminals of the converter and three converter arms arranged in parallel between the DC terminals, each converter arm comprising a series of four power semiconductor switches, the midpoints of the arms forming AC terminals of the converter.

It further comprises a control unit that operates the switches to provide conversion between DC and AC voltage, wherein the control unit is operated to use a restricted set of switching states for the switches wherein the switching states of that set are those that result in a common mode voltage of 0 V.

The hardware setup of this converter is commonly called a three-level neutral-point clamped power converter, but when operating it according to the invention, it works in a quasi-two-level mode.

In the method for controlling a power converter according to the invention, the power converter comprises a DC link with two DC link capacitors arranged in a series connection between DC terminals of the converter and three converter arms arranged in parallel between the DC terminals, each converter arm comprising a series of four power semiconductor switches, the midpoints of the arms forming AC terminals of the converter.

The switches are operated to provide conversion between DC and AC voltage and the switches are operated using a restricted set of switching states for the switches wherein the switching states of that set are those that result in a common mode voltage of 0 V.

The term switching state describes a present on/off state of all the semiconductor switches of the converter. As the converter comprises 3 converter arms of 4 switches each, there are 2^12 possible states. Most of these may not be used at all as they e.g. lead to a short circuit. Usable switching states of the converter lead to three possible values of the voltage at the AC terminals of +VDC, 0 and -VDC relative to the midpoint of the DC link capacitors, VDC being the voltage difference between the DC terminals. This leaves 27 (3*3*3) possible switching states available for an NPC three level converter. Of these switching states, only those seven states are part of the restricted set of switching states for which the sum of the voltages at the AC terminals is 0 V. These are the six switching states with voltages of exactly +VDC, 0 and -VDC in any order at the AC terminals and the state 0, 0, 0.

Advantageously in this mode of operation the power converter generates a reduced amount of common mode noise. Theoretically the resulting common mode noise is 0 V, as the switching states do not themselves create a common mode voltage. This in turn reduces the demands on a passive common mode noise filter which is typically bulky in difficult to design.

Further features that may be added alone or together in exemplary embodiments of the invention include:
The converter may comprise an auxiliary converter connected to the DC terminals and the midpoint between the DC link capacitors, wherein the control unit is configured to operate the auxiliary converter to provide capacitor load balancing for the DC link capacitors. The auxiliary converter allows reducing the voltage ripple on the DC link capacitors. The voltage ripple itself generates common mode noise and thus the auxiliary converter reduces common mode noise further. This in turn has the advantage that the DC link capacitance value can also be reduced (smaller DC link).

The auxiliary converter may comprise a series connection of least two auxiliary controllable semiconductor switches connected between the DC terminals and an inductance connected between the midpoint of the series connection and the midpoint between the DC link capacitors. This simple setup allows moving charge between the DC link capacitors using the auxiliary switches.

The series connection may comprise an even number of more than two controllable semiconductor switches and a capacitor connected between each node between two switches of the upper half of the series connection and a corresponding node in the lower half of the series.

For example, the series connection of the auxiliary converter may comprise six IGBTs with the inductance being connected to the node between the third and fourth IGBT. A first auxiliary capacitor is connected between a first node between the first and second IGBT and a second node between the fifth and sixth IGBT. A second auxiliary capacitor is connected between a third node between the second and third IGBT and a fourth node between the fourth and fifth IGBT.

This setup of the auxiliary converter is a flying capacitor setup and the control unit can control the auxiliary switches to create several different voltage/current levels result in finer control of the voltages of the DC link capacitors and thus in even more reduced common mode noise.

The switches of the converter arms may be switched at a first switching frequency, while the switches of the auxiliary converter are switched at a second switching frequency that is higher than the first switching frequency.

The auxiliary converter may comprise an auxiliary DC link comprising a series of two auxiliary DC link capacitors connected in parallel to the series connection of the semiconductor switches. The midpoint of the auxiliary DC link is connected to the midpoint of the DC link.

In an alternative embodiment, the auxiliary converter may comprise an auxiliary series connection of four auxiliary controllable semiconductor switches connected between the DC terminals, a first inductance connected between the midpoint of the upper two switches of the auxiliary series connection and a first DC output terminal, a second inductance connected between the midpoint of the lower two switches of the auxiliary series connection and a second DC output terminal and an output capacitor connected between the DC output terminals. This type of converter may be used in a charging environment for electric vehicles where the vehicle's battery is connected to the DC output terminals. A transformer may be used to provide electric isolation.

In an alternative embodiment, the auxiliary converter may comprise a first auxiliary DC/DC converter having first input and output terminals, wherein the first input terminals are connected to the terminals of the upper DC link capacitor, a second auxiliary DC/DC converter having second input and output terminals, wherein the second input terminals are connected to the terminals of the lower DC link capacitor, DC output terminals formed by an upper output terminal of the first auxiliary DC/DC converter and a lower output terminal of the second DC/DC converter and a switching network connected to the first and second output terminals comprising three operation mode switches arranged to allow switching the auxiliary DC/DC converters between operating in parallel or serial mode. This type of converter may also be used in a charging environment for electric vehicles where the vehicle's battery is connected to the DC output terminals. This converter provides good efficiency as the auxiliary DC/DC converters may be used in parallel or serially.

In a further alternative embodiment, the auxiliary converter may comprise an upper and lower DC input terminal, a first auxiliary series connection of six auxiliary controllable semiconductor switches connected between the DC terminals, the midpoint of the first auxiliary series being connected to the midpoint of the DC link, a second auxiliary series connection of two additional auxiliary controllable semiconductor switches connected between a first node between a second and third switch of the first auxiliary series and a second node between a fourth and fifth switch of the first auxiliary series, an inductance connected between the upper DC input terminal and the first node and a series of two auxiliary capacitors connected between a third node between a first and second switch of the first auxiliary series and a fourth node between a fifth and sixth switch of the first auxiliary series, the midpoint of the series of two auxiliary capacitors being connected to the midpoint of the second auxiliary series. This type of auxiliary converter may advantageously be connected to an accumulator or other type of energy storage with its DC input terminals and may perform DC link capacitor balancing.

In a further alternative embodiment, the auxiliary converter may comprise a first auxiliary half-bridge of two semiconductor switches connected in parallel to the upper DC link capacitor, a first inductance connected between the midpoint of the first auxiliary half-bridge and a first DC input terminal, a second auxiliary half-bridge of two semiconductor switches connected between the first DC input terminal and the lower DC terminal, a second inductance connected between the midpoint of the second auxiliary half-bridge and a second DC input terminal and a connection between the second DC input terminal and the midpoint of the DC link. This type of auxiliary converter may advantageously be connected to a photovoltaic element with its DC input terminals and may perform DC link capacitor balancing.

Embodiments of the present invention are now described with reference to the accompanying drawings to which the invention is not limited. The illustrations of the drawings are in schematic form. It is noted that in different figures, similar or identical elements use the same reference signs.
Fig. 1 shows a three-level NPC converter;
Fig. 2 shows switching states of the three-level NPC converter;
Fig. 3 shows a restricted set of switching states for the three-level NPC converter;
Fig. 4 shows DC link capacitor voltages and common mode noise over time,
Fig. 5 shows a converter with an auxiliary converter,
Fig. 6 shows DC link capacitor voltages and common mode noise over time in the converter with auxiliary converter,
Figs. 7-11 show alternative forms of the auxiliary converter.

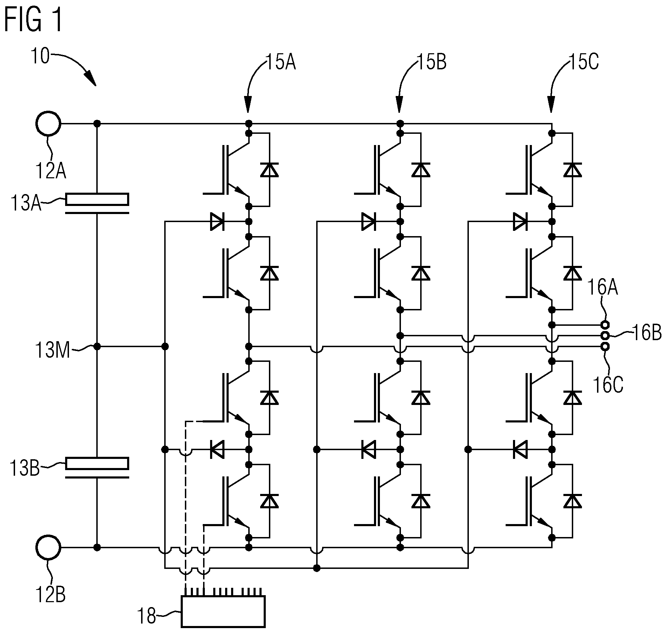

Figure 1 shows a circuit schematic of a three-level NPC converter 10 as it is known from the prior art. The converter 10 comprises DC terminals 12A, B and a DC link connected between the DC terminals 12A, B. The DC link comprises a series of two capacitors 13A, B with a midpoint 13M between the two capacitors 13A, B.

Also connected between the DC terminals 12A, B and parallel to the DC link and each other are three converter arms 15A, B, C, each converter arm 15A, B, C comprising a series of four semiconductor switches. The midpoints of each of the converter arms 15A, B, C form AC terminals 16A, B, C of the converter 10.

In each of the converter arms 15A, B, C, a diode series of two diodes connects a lower midpoint between the lower two semiconductor switches with a higher midpoint between the higher two semiconductor switches with the midpoints of the diode series connected to the midpoint 13M of the DC link.

The converter 10 further comprises a control unit 18 which is connected to the semiconductor switches and controls the switching states of the switches.

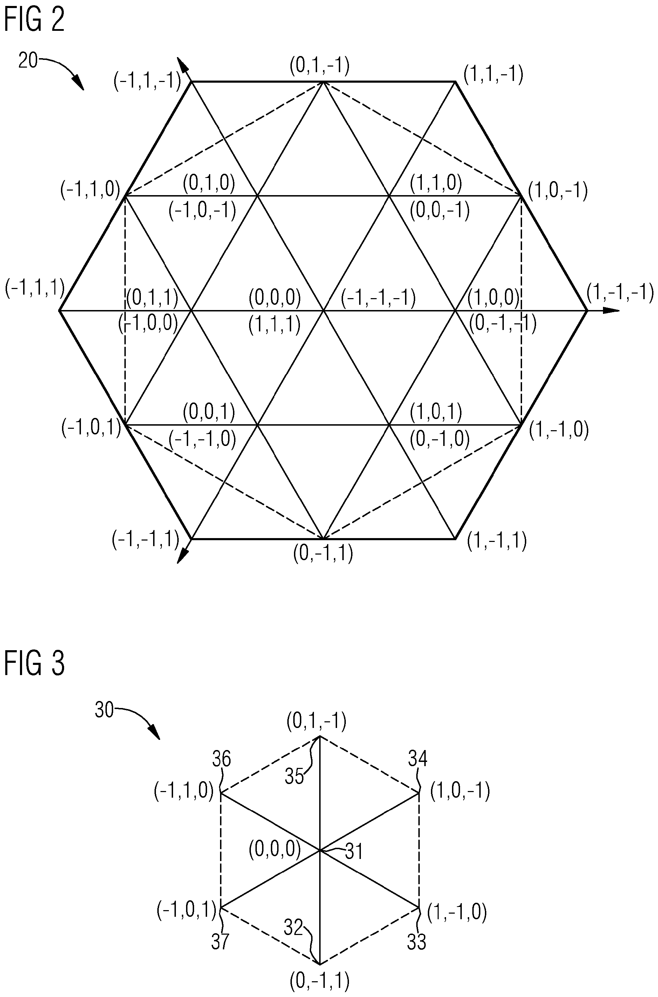

Figure 2 shows a diagram of the available switching states 20 of the converter 10. The voltages VMA, VMB and VMC between the midpoint 13M of the DC link and each of the AC terminals 16A, B, C can have three possible values, +VDC, 0 and -VDC, VDC being the voltage difference between the DC terminals 12A, B. These voltage levels are denoted as +1, 0 and -1 in the space vector diagram of figure 2. There are 27 (3*3*3) possible switching states available for an NPC three level converter as shown in figure 1.

In an embodiment of the invention, the control unit 18 uses a restricted set 30 of switching states. In other words, the control unit 18 does not use all the possible switching states as shown in figure 2 but sets the states of the switches only as allowed by the restricted set 30 of switching states.

The restricted set 30 of switching states is composed of all those switching states which produce zero common mode noise, VCM = 0. The common mode voltage is VCM = (VMA + VMB + VMC) / 3. With this switching strategy the three-level converter will work like a quasi two-level converter and the new switching states are shown in Fig 3.

The restricted set 30 of switching states is composed of those states where the sum of all three voltage states is 0, i.e. the switching state 31 at (0,0,0) and the six switching states 32...37 with voltage states of 1, -1 and 0 in any order.

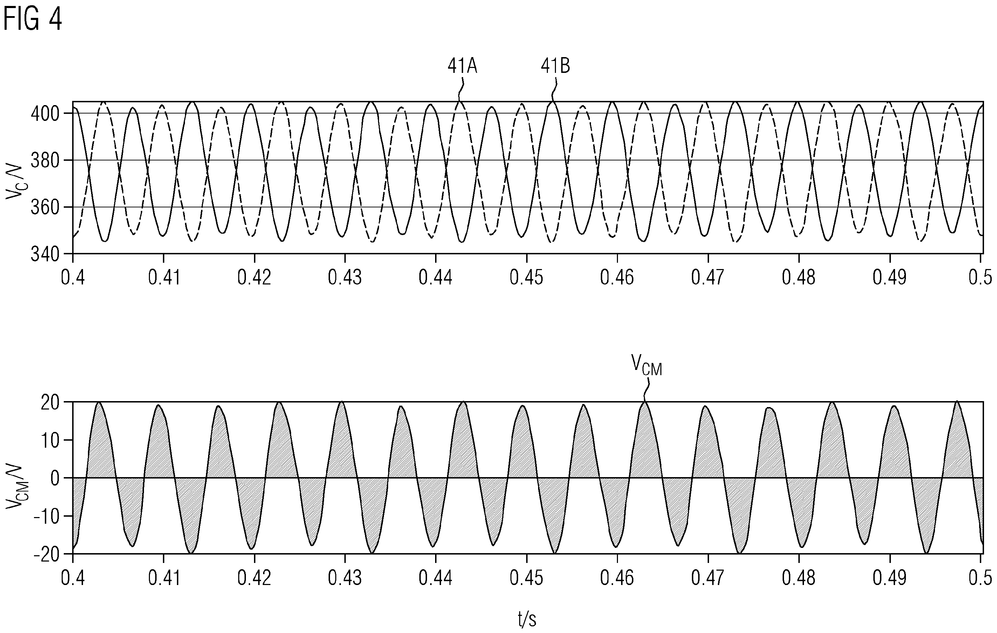

Balancing of the DC link capacitors 13A, B is naturally taking place in the NPC converter 10 in the quasi-two-level mode, but the charging and discharging of the DC link capacitors 13A, B is happening in low frequency as shown in top trace of figure 4. Figure 4 shows the voltages 41A, B of the DC link capacitors 13A, B over time. In this example, the variations have a frequency of 150 Hz.

The peak-to-peak ripple voltage depends on the values of the DC link capacitors 13A, B. The bottom trace of figure 4 shows the common mode VCM voltage resulting from the ripple on the DC link capacitors 13A, B. By using only the restricted set 30 of switching states of figure 3 the peak common mode voltage is reduced by approximately one order of magnitude, from around 200 V when using all switching states of figure 2 to around 20 V.

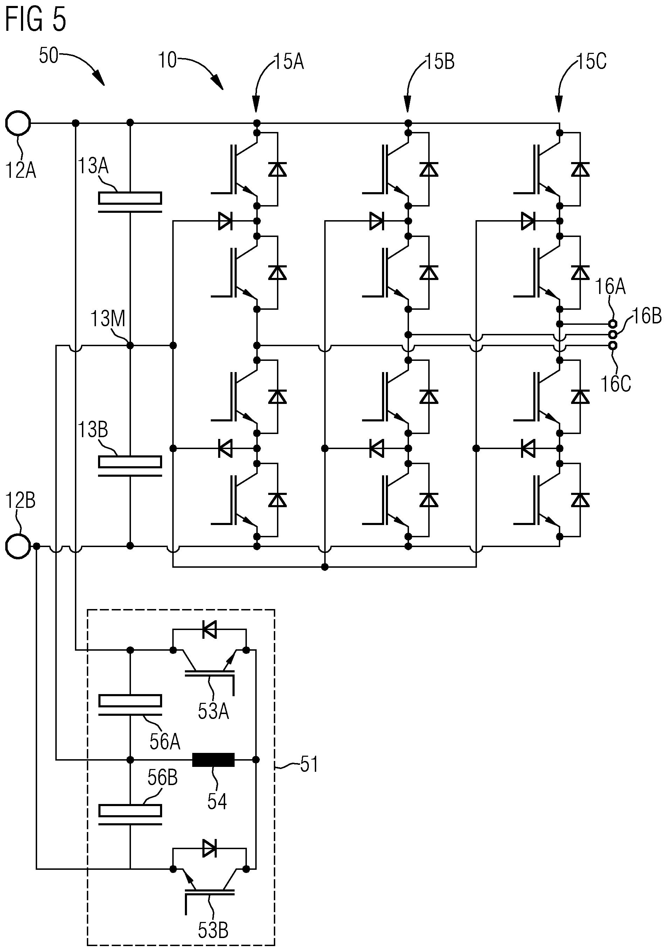

A second exemplary embodiment of the invention is shown in Figure 5. Figure 5 shows a converter 50 that comprises the NPC converter 10 as shown in figure 1. Additionally, the converter 50 comprises an auxiliary converter 51. The auxiliary converter 51 comprises a first and second auxiliary semiconductor switch 53A, B, e.g. IGBTs, that form a half-bridge and are connected parallel to the converter arms 15A, B, C. The midpoint 53M of the auxiliary semiconductor switches 53A, B is connected to an inductance 54 which in turn is connected to the midpoint 13M of the DC link capacitors 13A, B. The auxiliary converter 51 further comprises auxiliary DC link capacitors 56A, B, each connected in parallel to a respective DC link capacitor 13A, B.

During operation of the converter 50, the control unit 18 controls the switching behavior of the auxiliary switches 53A, B to perform balancing of the voltages of the DC link capacitors 13A, B. This is done by shifting energy from one DC link capacitor 13A, B to another by using the inductor 54 as energy storage. Turning on the upper auxiliary switch 53A in magnetizes the inductance 54 and therefore discharges the DC link capacitor 13A. When turning off the upper auxiliary switch 53A, the current continues flowing and charging the lower DC link capacitor 13B. The same operation principle is used for transferring energy from the lower to the upper DC link capacitor 13A, B. In this case the lower auxiliary switch 53B is used to control the energy flow. The switching frequency of the auxiliary converter 51 can be very high compared to that of the main load converter, i.e. the NPC.

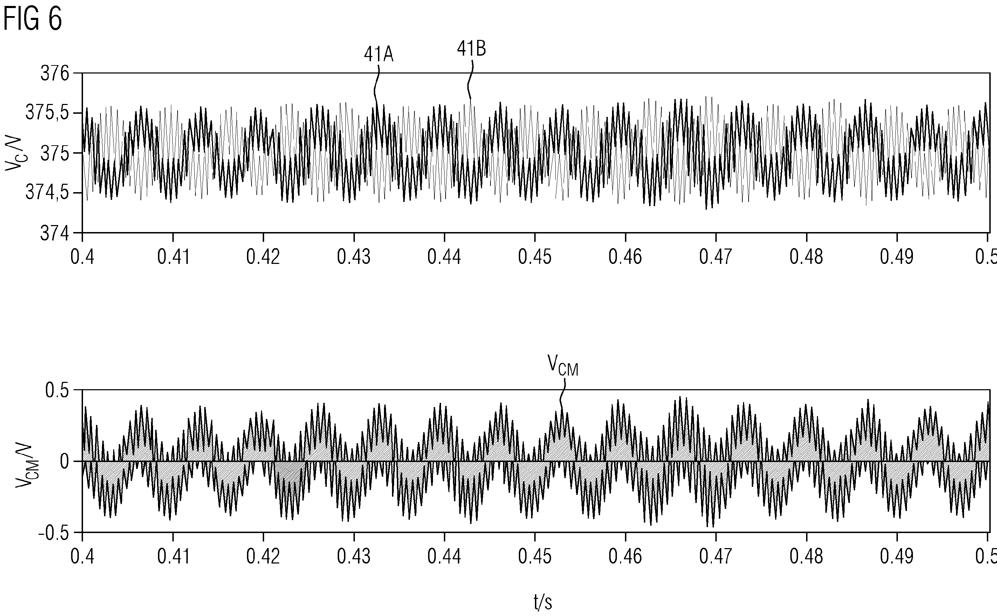

The result of this balancing is shown in figure 6. Like in figure 4, the top trace of figure 6 shows the voltages 41A, B of the DC link capacitors 13A, B over time. The variations of the voltages 41A, B when the auxiliary converter 51 is used are much smaller than those without the auxiliary converter 51.

The bottom trace of figure 6 shows the remaining common mode voltage VCM when using the auxiliary converter 51 to take care of the DC link voltage balancing. The voltage ripple is reduced from to approximately 1V peak to peak for the same DC link capacitance. Thus, the instantaneous value of the common mode voltage VCM is almost zero.

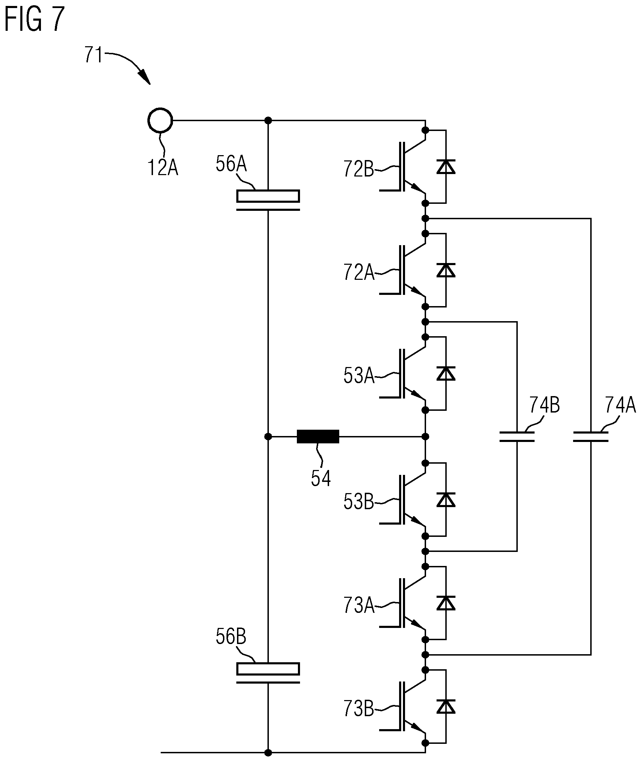

Due to parasitic coupling the of the inductor 54 to ground a certain common mode voltage VCM may be generated during the switching events. To avoid CM noise a different form of auxiliary converter 71 can be used that is shown in figure 7. For the purpose of clarity figure 7 omits the NPC converter 10 and only shows the auxiliary converter 71 that replaces the auxiliary converter 51.

The auxiliary converter 71 comprises the elements of auxiliary converter 51 of figure 5 but comprises an additional two semiconductor switches 72A, B in series to the upper semiconductor switch 53A as well as an additional two semiconductor switches 73A, B in series to the lower semiconductor switch 53A. Also, there is a capacitor 74A, B connected between each node between two switches of the upper half of the series connection and a corresponding node in the lower half of the series of all six semiconductor switches 53A, B, 72A, B, 73A, B. In this way a flying capacitor type auxiliary converter 71 is formed. This converter 71 can use a higher number of voltage levels to improve voltage balancing of the DC link capacitors 13A, B.

To further improve efficiency GaN switches can be used to design the auxiliary converter 51, 71 and the control unit 18 may operate the switches at very high frequencies.

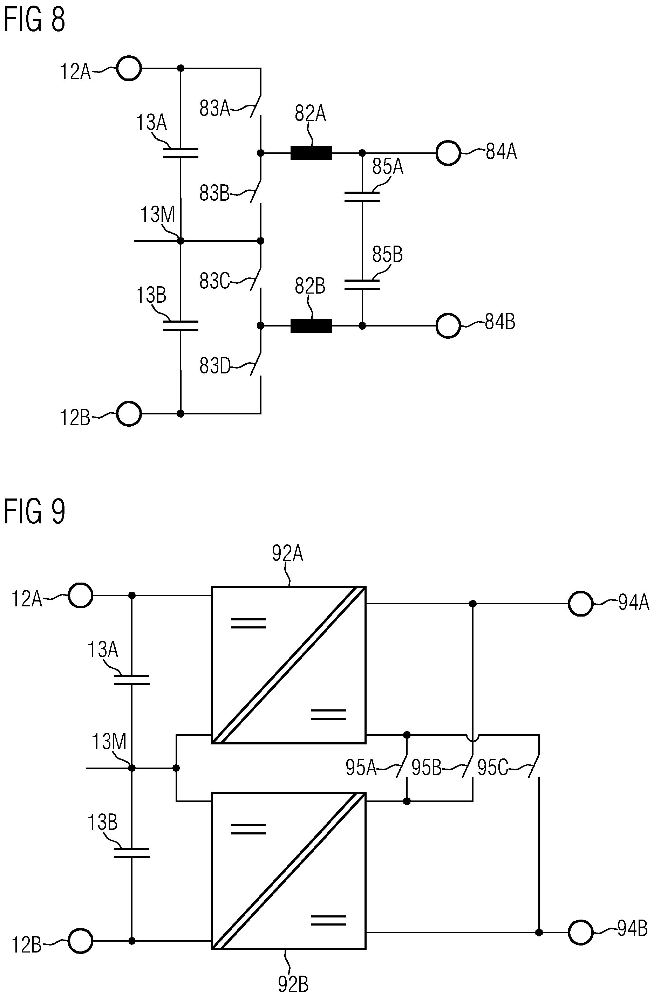

A third exemplary embodiment of the invention is shown in Figure 8. The converter of Figure 8 comprises the NPC converter as shown in figure 1 connected to the DC terminals 12A, B but this is omitted from figure 8. It comprises an auxiliary converter 81 that is a DC/DC converter.

The auxiliary converter 81 comprises an auxiliary series connection of four auxiliary controllable semiconductor switches 83A... D, e.g. IGBTs, connected between the DC terminals 12A, B.

It further comprises a first inductance 82A connected between the midpoint of the upper two switches of the auxiliary series connection and a first DC output terminal 84A, and a second inductance 82B connected between the midpoint of the lower two switches of the auxiliary series connection and a second DC output terminal 84B. A series of two output capacitors 85A, B are connected between the DC output terminals 84A, B.

This form of converter 81 can be used in charging applications for electric vehicles where the energy storage, i.e. battery, is connected to the output DC terminals to be charged. The AC terminals of the converter 10 are connected to the grid or other supply voltage. A 50 Hz transformer that is not shown in figure 8 may be used to provide isolation of the vehicle and the grid.

The control unit 18 is arranged to perform balancing of the DC link capacitors 13A, B using a slight variation of the pulse pattern of the upper and lower half-bridges formed by the auxiliary switches. This way the DC link capacitors could be unsymmetrically loaded which leads with a common upper-level control to a balancing of the DC link.

Charging systems typically have to cover a voltage range of 200 V - 920 V to support 400 V/800 V batteries which is challenging for the DC/DC converter. To solve this issue two DC/DC converters can be used and connected in a way to allow selecting between parallel operation for the 400V section and series operation for the 800V section.

A fourth exemplary embodiment of the invention that makes use of this kind of setup is shown in Figure 9. The converter of figure 9 comprises the NPC converter 10 as shown in figure 1 which is omitted from figure 9 but, again, connected to the DC terminals 12A, B. Additionally, the converter comprises an auxiliary converter 91 as shown in figure 9.

The auxiliary converter 91 comprises a first auxiliary DC/DC converter 92A having first input and output terminals, wherein the first input terminals are connected to the terminals of the upper DC link capacitor 13A. In other words, the input terminals of the first auxiliary DC/DC converter 92A are connected to the upper DC terminal 13A and the midpoint 13M of the DC link.

The auxiliary converter 91 comprises a second auxiliary DC/DC converter 92B having second input and output terminals, wherein the second input terminals are connected to the terminals of the lower DC link capacitor 13B. In other words, the input terminals of the second auxiliary DC/DC converter 92B are connected to the lower DC terminal 13B and the midpoint 13M of the DC link.

The auxiliary converter 91 comprises DC output terminals 94A, B formed by an upper output terminal of the first auxiliary DC/DC converter 92A and a lower output terminal of the second DC/DC converter 92B. The DC output terminals 94A, B connect to the battery of an electric vehicle for recharging.

The auxiliary converter 91 further comprises a switching network connected to the first and second output terminals comprising three operation mode switches 95A, B, C arranged to allow switching the auxiliary DC/DC converters 92A, B between operating in parallel or serial mode.

The first operation mode switch 95A is connected between the lower output terminal of the first auxiliary DC/DC converter 92A and the upper output terminal of the second auxiliary DC/DC converter 92B. The second operation mode switch 95B is connected between the upper output terminal of the first auxiliary DC/DC converter 92A and the upper output terminal of the second auxiliary DC/DC converter 92B. The third operation mode switch 95C is connected between the lower output terminal of the first auxiliary DC/DC converter 92A and the lower output terminal of the second auxiliary DC/DC converter 92B.

The control unit 18 closes the first operation mode switch 95A and opens the other two operation mode switches 95B, C to place the auxiliary DC/DC converters 92A, B in serial operation mode, effectively adding their output voltages. Reversing the switching state of the operation mode switches 95A...C places the auxiliary DC/DC converters 92A, B in parallel operation mode, effectively adding their output currents.

Typically, during operation, the power is distributed equally between both auxiliary DC/DC converters 92A, B. In order to balance the DC link capacitors 13A, B a power variation is used. The individual DC link voltages are measured using voltage sensors 96A, B and compared to half of the voltage setpoint. If a positive error occurs the power/current setpoint is decreased to increase the DC link capacitor voltage and vice versa. A simple PI controller can be used to adjust the voltages accordingly and generate an additional offset value for the lower-level current/power controller. Ideally the switching frequency of the auxiliary DC/DC converters 92A, B is higher than that of the grid connection converter 10 to improve the stability of the DC link voltage and reduce the voltage ripple / common mode noise due to the voltage ripple.

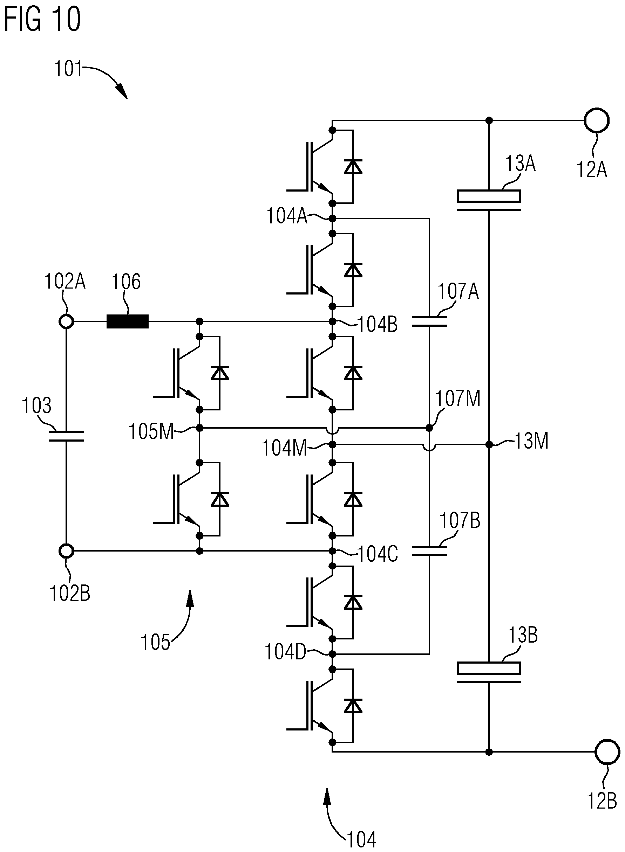

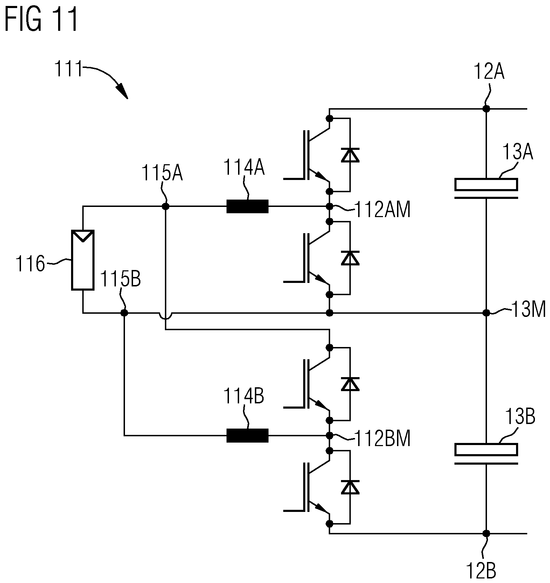

Two further exemplary embodiments of the invention are shown in figures 10 and 11. In both cases the NPC converter 10 that is part of the converter setup is not shown; instead, only the auxiliary converters 101 and 111 are shown, again with the NPC converter connected to DC terminals 12A, B. In both cases, the connected NPC converter 10 may for example be connected to the grid. Also, in both cases, DC link capacitor balancing is performed by appropriate switching of the switches in the auxiliary converters.

The auxiliary converter 101 of figure 10 comprises an upper and lower DC input terminal 102A, B that connect to an energy storage, for example an accumulator 103. It further comprises a first auxiliary series connection 104 of six auxiliary controllable semiconductor switches connected between the DC terminals 12A, B, the midpoint 104M of the first auxiliary series 104 being connected to the midpoint 13M of the DC link.

There is also a second auxiliary series connection 105 of two additional auxiliary controllable semiconductor switches connected between a first node 104B between a second and third switch of the first auxiliary series 104 and a second node 104C between a fourth and fifth switch of the first auxiliary series 104.

It further comprises an inductance 106 connected between the upper DC input terminal 102A and the first node 104B and a series of two auxiliary capacitors 107A, B connected between a third node 104A between a first and second switch of the first auxiliary series 104 and a fourth 104D node between a fifth and sixth switch of the first auxiliary series 104, the midpoint 107M of the series of two auxiliary capacitors being connected to the midpoint 105M of the second auxiliary series 105.

The auxiliary converter 111 of figure 11 comprises a first auxiliary half-bridge 112A of two semiconductor switches connected in parallel to the upper DC link capacitor 13A and a first inductance 114A connected between the midpoint 112AM of the first auxiliary half-bridge 112A and a first DC input terminal 115A. It further comprises a second auxiliary half-bridge 112B of two semiconductor switches connected between the first DC input terminal 115A and the lower DC terminal 12B and a second inductance 114B connected between the midpoint 112BM of the second auxiliary half-bridge and a second DC input terminal 115B. The second DC input terminal 115B and the midpoint 13M of the DC link are connected.

The DC input terminals 115A, B are connected to PV source 116 that feeds energy into the converter. The auxiliary converter 111 acts as a DC/DC converter to feed the DC link and the NPC converter 10 acts as the grid converter.

### List of reference numbers

10 three level NPC converter
12A, B DC terminals
13A, B DC link capacitors
13M midpoint of the DC capacitors
15A, B, C converter arms
16A, B, C AC terminals
18 control unit
20 switching states
30 restricted set of switching states
31...37 switching states of the restricted set
VCM common mode noise
VMA, VMB, VMC voltages between the AC terminals and the DC link midpoint
41A, B voltages of the DC link capacitors over time
50, 80, 90 converter
51, 81, 91, 101, 111 auxiliary converter
53A, B auxiliary switches
53M midpoint of the auxiliary switches
54 inductance
56A, B auxiliary DC link capacitors
82A, B inductances
83A... D auxiliary switches
84A, B DC output terminals
85A, B output capacitors
92A, B auxiliary DC/DC converters
94A, B DC output terminals
95A... C operation mode switches
96A, B voltage sensors
102A, B DC input terminals
103 accumulator
104 first auxiliary series connection
104A... D nodes
104M midpoint of the first auxiliary series connection
105 second auxiliary series connection
105M midpoint of the second auxiliary series connection
106, 114A, B inductance
107A, B auxiliary capacitors
107M midpoint of the auxiliary capacitors
112A, B auxiliary half-bridges
112AM, 112BM midpoints of the auxiliary half-bridges
115A, B DC input terminals
116 PV source

## Claims

1. A power converter (50, 80, 90) comprising:
- a DC link with two DC link capacitors (13A, B) arranged in a series connection between DC terminals (12A, B) of the converter (50, 80, 90),
- three converter arms (15A, B, C) arranged in parallel between the DC terminals (12A, B), each converter arm (15A, B, C) comprising a series of four power semiconductor switches, the midpoints of the arms forming AC terminals (16A, B, C) of the converter (50, 80, 90),
- a control unit (18) that operates the switches to provide conversion between DC and AC voltage, wherein the control unit (18) is operated to use a restricted set (30) of switching states (31...37) for the switches wherein the switching states (31...37) of that set (30) are those that result in a common mode voltage (VCM) of 0 V.

2. The converter (50, 80, 90) of claim 1, comprising an auxiliary converter (51, 81, 91, 101, 111) connected to the DC terminals (12A, B) and the midpoint (13M) between the DC link capacitors (13A, B), wherein the control unit is (18) configured to operate the auxiliary converter (51, 81, 91, 101, 111) to provide capacitor load balancing for the DC link capacitors (13A, B).

3. The converter (50, 80, 90) of claim 2, wherein the auxiliary converter (51, 81, 91, 101, 111) comprises
- a series connection of least two auxiliary controllable semiconductor switches connected between the DC terminals,
- an inductance connected between the midpoint of the series connection and the midpoint between the DC link capacitors.

4. The converter (50, 80, 90) of claim 3, wherein the series connection comprises an even number of more than two controllable semiconductor switches and a capacitor connected between each node between two switches of the upper half of the series connection and a corresponding node in the lower half of the series.

5. The converter (50, 80, 90) of claim 3 or 4, wherein the auxiliary converter (51, 81, 91, 101, 111) comprises an auxiliary DC link comprising a series of two auxiliary DC link capacitors connected in parallel to the series connection of the semiconductor switches.

6. The converter (50, 80, 90) of claim 2, wherein the switches of the converter arms are switched at a first switching frequency and the switches of the auxiliary converter (51, 81, 91, 101, 111) are switched at a second switching frequency that is higher than the first switching frequency.

7. The converter (50, 80, 90) of claim 2, wherein the auxiliary converter (51, 81, 91, 101, 111) comprises
- an auxiliary series connection of four auxiliary controllable semiconductor switches connected between the DC terminals,
- a first inductance connected between the midpoint of the upper two switches of the auxiliary series connection and a first DC output terminal,
- a second inductance connected between the midpoint of the lower two switches of the auxiliary series connection and a second DC output terminal,
- an output capacitor connected between the DC output terminals.

8. The converter (50, 80, 90) of claim 2, wherein the auxiliary converter (51, 81, 91, 101, 111) comprises
- a first auxiliary DC/DC converter having first input and output terminals, wherein the first input terminals are connected to the terminals of the upper DC link capacitor 13A,
- a second auxiliary DC/DC converter having second input and output terminals, wherein the second input terminals are connected to the terminals of the lower DC link capacitor 13B,
- DC output terminals formed by an upper output terminal of the first auxiliary DC/DC converter and a lower output terminal of the second DC/DC converter,
- a switching network connected to the first and second output terminals comprising three operation mode switches arranged to allow switching the auxiliary DC/DC converters between operating in parallel or serial mode.

9. The converter (50, 80, 90) of claim 2, wherein the auxiliary converter (51, 81, 91, 101, 111) comprises
- an upper and lower DC input terminal,
- a first auxiliary series connection of six auxiliary controllable semiconductor switches connected between the DC terminals, the midpoint of the first auxiliary series being connected to the midpoint of the DC link,
- a second auxiliary series connection of two additional auxiliary controllable semiconductor switches connected between a first node between a second and third switch of the first auxiliary series and a second node between a fourth and fifth switch of the first auxiliary series,
- an inductance connected between the upper DC input terminal and the first node,
- a series of two auxiliary capacitors connected between a third node between a first and second switch of the first auxiliary series and a fourth node between a fifth and sixth switch of the first auxiliary series, the midpoint of the series of two auxiliary capacitors being connected to the midpoint of the second auxiliary series.

10. The converter (50, 80, 90) of claim 2, wherein the auxiliary converter (51, 81, 91, 101, 111) comprises
- a first auxiliary half-bridge of two semiconductor switches connected in parallel to the upper DC link capacitor,
- a first inductance connected between the midpoint of the first auxiliary half-bridge and a first DC input terminal,
- a second auxiliary half-bridge of two semiconductor switches connected between the first DC input terminal and the lower DC terminal (12B),
- a second inductance connected between the midpoint of the second auxiliary half-bridge and a second DC input terminal,
- a connection between the second DC input terminal and the midpoint (13M) of the DC link.

11. A method of controlling a power converter (50, 80, 90), the power converter comprising:
- a DC link with two DC link capacitors arranged in a series connection between DC terminals of the converter,
- three converter arms arranged in parallel between the DC terminals, each converter arm comprising a series of four power semiconductor switches, the midpoints of the arms forming AC terminals of the converter,
wherein
- the switches are operated to provide conversion between DC and AC voltage,
- the switches are operated using a restricted set of switching states for the switches wherein the switching states of that set are those that result in a common mode voltage of 0 V.
